Europäisches Patentamt

European Patent Office

Office européen des brevets

(19)

(11) **EP 1 101 289 B1**

(12) **EUROPEAN PATENT SPECIFICATION**

(45) Date of publication and mention
of the grant of the patent:
**28.09.2005 Bulletin 2005/39**

(21) Application number: **99936796.4**

(22) Date of filing: **29.07.1999**

(51) Int Cl.$^7$: **H04B 1/66**

(86) International application number:
**PCT/GB1999/002473**

(87) International publication number:
**WO 2000/007303 (10.02.2000 Gazette 2000/06)**

(54) **METHOD FOR INSERTING AUXILIARY DATA IN AN AUDIO DATA STREAM**

VERFAHREN ZUM EINFÜGEN VON ZUSATZDATEN IN EINEN AUDIODATENSTROM

PROCEDE PERMETTANT D'INTRODUIRE DES DONNEES AUXILIAIRES DANS UN TRAIN DE DONNEES SONORES

(84) Designated Contracting States:
**AT BE CH CY DE DK ES FI FR GB GR IE IT LI LU MC NL PT SE**

(30) Priority: **29.07.1998 GB 9816518**

(43) Date of publication of application:
**23.05.2001 Bulletin 2001/21**

(60) Divisional application:
**04020979.3**

(73) Proprietor: **BRITISH BROADCASTING CORPORATION**
**London W1A 1AA (GB)**

(72) Inventor: **MCPARLAND, Andrew, Kevin**
**Epsom, Surrey KT18 7JA (GB)**

(74) Representative: **Kazi, Ilya et al**
**Mathys & Squire**
**120 Holborn**
**London EC1N 2SQ (GB)**

(56) References cited:
**EP-A- 0 372 601      EP-A- 0 601 437**
**US-A- 5 404 377      US-A- 5 687 191**

EP 1 101 289 B1

## Description

The present invention relates to embedding of data or synchronisation signals in another data stream. The invention is particularly concerned with inserting information into a data stream which has been or is intended to be coded, particularly compressed, a particular example being from a linear digital format such as PCM to an MPEG (or similar) audio bitstream. Details of MPEG audio coding are defined in ISO/IEC standards IS 11172-3 and IS 13818-3.

WO-A-98/33284 describes a method of audio signal processing in which auxiliary data is communicated with a decoded audio signal to assist in subsequent re-encoding of the audio signal. Several methods of communicating the data are disclosed; however, the inventor has found that there is room for improvement of the methods disclosed in that application.

The inventor has appreciated that another application in which it would be useful to carry additional data with an audio bitstream is to establish frame boundaries and synchronisation with a previously coded signal. In particular, WO-A-99/04572 discloses a method of re-encoding a previously coded signal in which the signal is analysed to determine previous coding characteristics. The inventor has appreciated that if some form of synchronisation information were embedded in the signal, the analysis could be simplified.

There has been discussion of carrying additional data in an audio data signal, for example to carry surround sound information, by inserting the data so as to be nearly imperceptible; proposals of this kind however generally involve complex proprietary signal processing and are not designed to accommodate further coding of the signal.

EP -A- 0 372 601 discloses a method of inserting information, such as a copy protection signal based on psychoacoustic modelling. The subband signal incorporating the information is recorded. US 5,687,191 discloses post compression hidden data transport in which auxiliary data subband samples are transported in a compressed audio signal without decompressing the data.

The invention aims to provide a method of communicating data or synchronisation information together with a main data signal without unduly affecting the transmission of the main data signal.

In a broad overview, the invention provides methods and apparatus for inserting auxiliary digital data in a main digital data stream which is subsequently to be coded to produce a coded data stream (or which has been decoded from a coded data stream), comprising identifying at least one component of the main data stream which will make substantially no contribution to the coded data stream (or which was not present in the coded data stream) and inserting data from the auxiliary data stream in the or each component.

Aspects of the invention are set out in the independent claims.

In this way, the eventual coded data stream will be substantially unaffected by the insertion of the auxiliary data, so there will be no overall degradation or distortion introduced by the extra data. However, the auxiliary data will have been carried "for free" with the main data signal until it reaches the coder. Although the invention will normally be employed in conjunction with data which is to be coded subsequently (in which case the auxiliary data may be removed at or around the time of coding), the invention may be employed with data which has previously been coded but is not necessarily to be coded further; this still provides the advantage that the carrying of additional information cannot degrade the data further as no "real" information is overwritten by the auxiliary data.

A further potential advantage is that, because the insertion of data is based on the principles used in coding, components can be shared between the data insertion apparatus and a coder or decoder, particularly when integrated as a unit including a data insertion function and a coding or decoding function, rather than requiring bespoke design. The auxiliary data may be carried further with the coded data stream, but no longer embedded in the main data stream. For example, in the case of coded audio, the coded data format may allow the auxiliary data to be carried directly as data in addition to the coded audio. The auxiliary data is preferably used to assist in choosing coding decisions or in synchronising the coder with a previous coder. The main data signal is preferably an audio signal, but may be a video or other signal.

Whilst the invention is primarily concerned with adding information to a digital main data signal, it is to be appreciated that this digital signal can be converted into other forms; for example a linear PCM digital signal carrying embedded digital data or a synchronisation signal may be converted to analogue form and back again and provided the conversion is faithful, the data may be recovered, or at least the synchronisation signal may be identified.

The method may further include extracting the auxiliary data and coding the main data. At least one coding parameter or decision is preferably based on the auxiliary data.

Preferably coding includes quantising data words corresponding to said main digital data stream or, more preferably, a transformed data stream to a plurality of levels less than the number of levels codable by said data words.

The component of the main data stream may corresponds to less significant bits of coded data words which are to be quantised by said coding to one of a predetermined number of levels, the number of levels being less than the number of levels encodable by the data words. For example, if an n-bit word is to be quantised by coding to $2^m$ levels, where $m < n$, $n-m$ bits may be available to carry additional data.

The change in the data stream effected by insertion of the auxiliary data is substantially imperceptible, for example below (or at) the audible noise floor in the case of audio data or having substantially no perceptible effect on picture quality in the case of a video signal.

Inserting the auxiliary data may also comprise inserting the data into unused sub-band samples of a transformed set of data.

In a preferred application, the main data comprises audio data to be coded according to an MPEG-type audio coding scheme (by which is meant any similar coding scheme based on the principle of quantising a plurality of sub bands or other components into which the signal is analysed) and identifying at least one component comprises identifying sub-bands which are unoccupied and identifying quantisation levels, the auxiliary data being inserted in unoccupied bands or at a level below the quantisation noise floor.

There is therefore also described a method of inserting auxiliary data into an audio data stream to be coded by analysing the audio data into a plurality of sub-bands and quantising the sub-bands, the method comprising estimating sub-bands and quantisation levels for a subsequent or previous coding and inserting the auxiliary data at a level substantially below the level of estimated quantisation noise.

Estimating sub-bands and quantisation levels may include transforming the (audio) data from the time domain (or an uncoded domain) to the frequency domain (or a coded domain) or otherwise analysing the data into a plurality of subbands, for example using a Fourier or the like transform. Data may be inserted in the frequency domain, and the modified frequency domain data may be transformed back to the time domain.

A particular advantage arises when the estimated sub bands or quantisation levels correspond directly to sub bands or quantisation parameters which have been or will be used in coding of the data; there is substantially no effect on the coded signal, as the component(s) of the main data signal which are used to carry the auxiliary data would otherwise be lost by the coding process.

The data to be carried may comprise a defined synchronisation sequence; this may facilitate detection of frame boundaries and the like and may be employed to facilitate extraction of other data or to minimise degradation between cascaded coding and decoding operations.

The auxiliary data or synchronisation signal may also be inserted into an upper subband of the main data.

Also described is a method of carrying a synchronisation sequence with a main digital data signal, preferably an audio signal, for example a linear PCM audio signal, comprising inserting a defined sequence of synchronisation words into a component of the main data signal, preferably an unused subband, to facilitate identification of or synchronisation with previous coding of the signal.

There is further described a method of detecting a frame boundary or establishing synchronisation with a data signal produced by the above method comprising searching for a sequence of synchronisation words in said component of the data signal and comparing at least one value found, or a derived value to a stored sequence of values.

The method of the invention provides a digital data signal, preferably a linear PCM audio bitstream, comprising an audio signal and at least one of a synchronisation sequence or an auxiliary data signal embedded in an otherwise unused subband or in subbands below an MPEG quantisation noise floor.

The invention extends to apparatus for inserting auxiliary data into a data stream and to data streams coded by the above method.

Embodiments of the invention will now be described by way of example, with reference to the accompanying drawings in which:

Fig. 1 shows schematically cascaded MPEG-type coding and decoding transformations;
Fig. 2 shows bit allocation for a typical signal;
Fig. 3 shows scalefactors and the lowest level that can be coded for the signal of Fig. 2;
Fig. 4 shows space determined to be available for data transmission in accordance with the invention;
Fig. 5 is an illustration of the effect of 32-sample alignment on an ID sequence
Fig. 6 shows an example synchronisation signal;
Fig. 7 shows insertion and extraction of the synchronisation signal.

A preferred application of the invention involves carrying additional data with an audio signal which is to be coded according to MPEG audio coding. The basic principles will be described, to assist in understanding of the invention.

## Carrying data with MPEG audio signals -basic principles

MPEG audio uses the idea of psychoacoustic masking to reduce the amount of information to be transmitted to represent an audio signal. The reduced information is represented as a bitstream. Psychoacoustic masking is usually calculated on a frequency representation of an audio signal. In MPEG audio a filterbank is used to split the audio into 32 subbands, each representing part of the spectrum of the signal.

The encoder uses a psychoacoustical model to calculate the number of bits needed to code each of these subbands such that the quantisation noise inserted is not audible. So, in each subband, only the most significant bits are transmitted.

In this embodiment, the aim is to carry data along with audio in a linear digital PCM form (although other digital formats may be employed). The data should be carried inaudibly and be capable of being fully recovered without data loss. We have found that, depending on the bit-rate used for the MPEG encoding and the nature of the signal, it is possible to transmit between 50 and 400 kbits/sec of data under a stereo audio signal.

General applications of data-carrying possible with the embodiment include carrying associated data with the audio, such as text (e.g. lyrics). In addition, a specific use of the invention, to be described in more detail below, arises if a signal is already in MPEG coded form or has been previously coded but needs to be conveyed in linear form; here the extra data can contain details of the coding process or synchronisation information to assist in subsequent re-coding, or pictures associated with the audio.

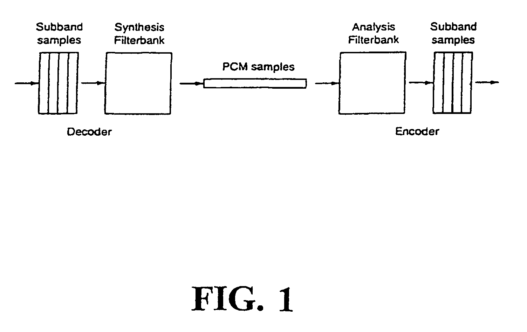

The filterbanks in MPEG audio have the property of (nearly) perfect reconstruction. A diagram of a decoder to an encoder is shown in Fig. 1. If the filterbanks are aligned correctly then the subband samples in the encoder will be practically identical to those that originated in the decoder.

When an encoder encodes the signal it attempts to allocate enough bits for each subband such that the resulting signal is not audibly different from the original.

### Selection of components for carrying data

Given these two properties, we have appreciated that data can be inserted into the subbands below the level of the significant audio signal such that the inserted data is inaudible (or at least not introducing any impairments beyond those of the MPEG encoding).

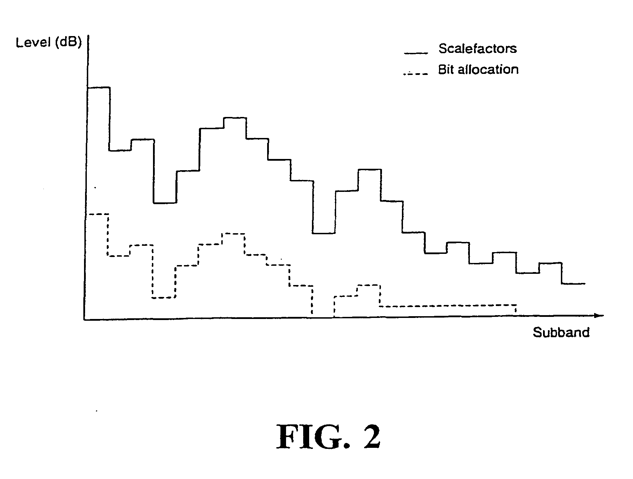

Fig. 2 shows the measured level of the audio in each subband, coded as "scalefactors" in the MPEG audio bitstream. It also shows the bit allocation chosen by an encoder. This is specified as the number of quantisation levels for a particular subband. In the diagram, the bit allocation is represented as a signal-to-noise ratio, in dB terms, to permit representation on the same axis. For this purpose, each bit that is needed to represent the number of quantisation levels is approximately equivalent to 6dB of "level".

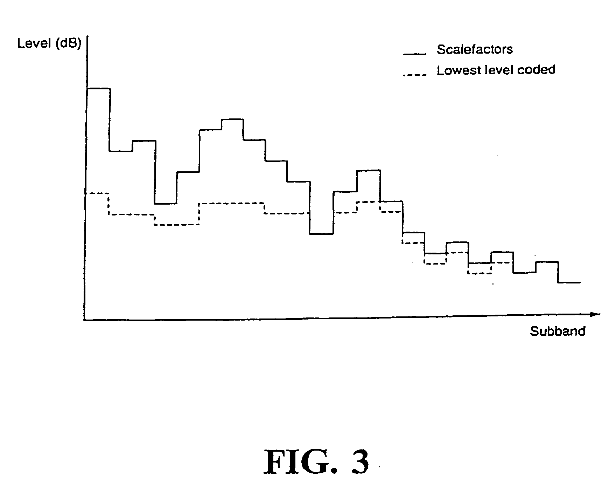

If instead we show the scalefactors and the lowest level that can be encoded with the bit allocation from Fig. 2 we get the graph in Fig. 3.

One can see that the levels below the lowest level are unused. As the MPEG model has determined that there is no audible information below these lowest levels we are free to use them for data.

Given the constraint that we should not interfere with the audio, levels near that of the lowest level will not be used. This should also mean that no clipping problems are introduced. Given also that the signal is probably to be transmitted or stored over a linear medium with limited resolution (e.g. 16 bits), this imposes a constraint on the lowest level we can send. Due to inaccuracies in reconstruction because of truncation to PCM and limits on accuracy in the filterbank calculation, it is unwise to use the levels closest to the PCM quantisation limit (e.g the 16th bit). In the case of subbands where no information is to be sent two strategies are available.

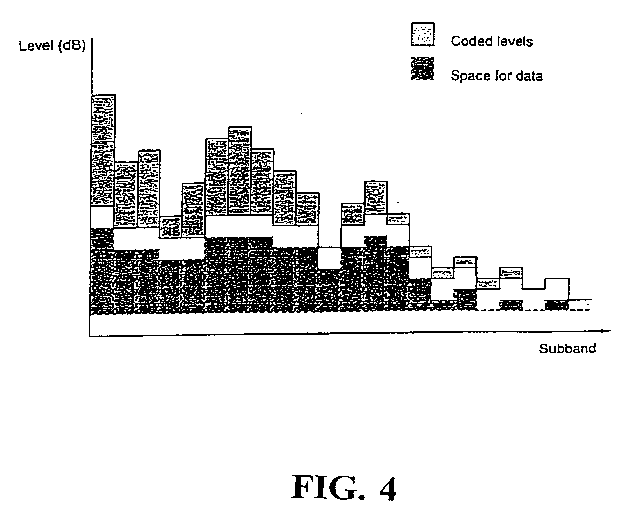

If we are decoding an MPEG bitstream to insert data, we would not know the level of that subband so, to be safe, we should probably not send any data in that subband. If, on the other hand, we are using an encoder purely for generating data we could use the levels just below the full level in this subband. A diagram showing the area where the data could be inserted, for the latter case, is shown in Fig. 4.

In the case of subbands containing an audio signal, the level of the data will be below the most significant levels. Data could also be inserted into other subbands, below the level of audibility or above the range of normal hearing (e.g. in the subbands not used in MPEG encoding).

### Practical Implementation Details

For a practical implementation several issues need to be addressed, in particular how the data is inserted and how the data is recovered. Data could be inserted when decoding an MPEG audio bitstream or the functions of an encoder and decoder could be combined to filter the signal, analyse it, quantise the audio appropriately, insert the data, then convert the signal back to the PCM domain.

### Data insertion

A proposed method of data insertion is first to calculate the number of bits available and then mask subband values with the data before they are fed to the synthesis filterbank. A 16-bit system is assumed, but the calculations are similar for a larger number of bits. The scheme described below is simple and safe.

#### Calculation of the bits available

Take the maximum scalefactor for a subband as representing a maximum value signal that can be conveyed in a 16-bit PCM system. Then consider that approximately 96dB below this is the quantisation floor of the 16-bit PCM system. Scalefactors are defined in 2dB steps. Once the scalefactor for a given subband is calculated determine the difference between this and the noise floor in dB (the range, R). The MPEG psychoacoustic model will give the bit allocation. Translate the bit allocation for the subband to a signal-to-noise figure in dB (Q). Thus calculate the range in dB available for data (D) from the quantisation floor to the lowest level represented.

**EP 1 101 289 B1**

$$D = R - Q$$

Then subtract the safety margins of 1-bit near the signal and another bit near the noise floor, remembering 1-bit is approximately equivalent to 6dB signal-to-noise.

$$D = D - 12$$

Next allocate a number of data bits (N) per subband by finding the integer number of bits that can be represented within D by doing an integer division on D.

$$N = int(D / 6)$$

This value is valid for a particular subband and scalefactor. In MPEG Layer 2 there are up to 3 different scalefactors per frame so each could have its own number of bits or the minimum could be taken of all 3 scalefactors.

Masking the data onto the subband value

From the procedure described above the number of bits available (N) is used to create a mask (M).

$$M = Oxffff < < (N + 1) \text{ for a 16-bit system}$$

The subband value is then converted to a 16-bit integer, masked with this value and the data inserted onto the N Least Significant Bits (excluding the last bit of course) to give a sample S. To ensure the most accurate representation of the signal a rounding value is added to S, +0.5 if the signal is positive and -0.5 if it is negative. This gives almost perfect reconstruction in the analysis filter and the data is recovered perfectly.

An easy method of inserting the data is to treat the data as a bitstream and insert as many bits into each subband as possible. However, to indicate synchronisation it would be useful to put a sequence into consecutive (in time) values of subband values so that a whole frame can be identified.

Data Extraction

To extract the data from the signal, alignment of the filterbanks and a method of describing where the data is (the bit allocation) and how it is organised are needed. These points are addressed below.

Synchronisation

To extract the data, synchronisation with the 32-sample and frame structure of the audio signal are needed. A separate synchronisation signal could be sent or this signal could be included in the data sent. Another possibility is to deduce the 32-sample boundary and then use a synchronisation word within the data to identify the frame boundary. This aspect is discussed further below.

Bit allocation

To extract the data, the position of the data within the subbands must be known. There are several options for how this information is conveyed:

The bit allocation could be implicit by having the same psychoacoustic model in the receiver of the data as in the transmitter.

The bit allocation could be signalled separately, e. g. in an upper unused subband, in the user bits of an AES/EBU bitstream or by another technique that does not interfere with the system described above.

The bit allocation can be contained within the space for data, with mechanisms provided to signal the location of the bit allocation.

This last option is discussed below.

Data organisation

If the bit allocation is known then the data can be carried in whatever form is suitable for that particular data. A checksum is advisable as well as a synchronisation word to define the start of the frame and/or data. If the bit allocation is to be carried within the data then the dynamic nature of the bit allocation must be taken into account.

An example layout for MPEG Layer 2 audio, using only 1 bit allocation per frame (i.e. not taking into account the 3 possibly different scalefactors) will be discussed.

A synchronisation word is needed to show where the frame starts. This needs to be followed by the bit allocations for each subband, preferably with a checksum and then followed by the data itself, again preferably with a checksum. The synchronisation word should be followed by a pointer to the space where the bit allocation is contained. Due to the dynamic nature of the bit allocation, the following manner of organisation would be appropriate, with the information preferably appearing in the order listed (details may change):

Synchronisation word
This should ideally be placed in the lowest subband with data space available, usually the first subband. The sequence may be placed 1 bit at a time into consecutive (in time) subband values, in the lowest bit available for data transmission. The data receiver may have to search for this word if the sync word is not placed in the first subband. There are a minimum of 36 bits available in a subband per frame and, for example, 18 bits can be used for the sync word.

Pointer to bit allocation

This should point to subbands that have data space available to store the bit allocation. Assuming we use 4 bits per subband to describe the bit-allocation for that subband, with 32 subbands we need 128 bits in total. So, given that we have multiples of 36 bits available per subband per frame, we need to be able to point to areas containing 4 times 36 bits. Given that there are 18 bits available in the synchronisation subband, one possibility is to use a 4-bit pointer to a subband and a 2-bit count of the number of bits available. The 4-bit pointer can indicate an offset upwards to the next subband (with the range 1 to 16). The 2-bit count can be from 1 to 4 bits, as 4 is the maximum number we need. We could then have three of these pointers in the first subband. An exception case could be defined if we only have subbands with 1 bit available.

Bit allocation

This should contain 32 times 4-bits to indicate the number of bits available per subband. It should ideally be followed by a 16-bit checksum to ensure the data is correct, making a total of 144 bits.

The data can then follow the above header information.

The above scheme has an overhead of 180 bits per frame, which is approximately 6900 bits per second per audio channel at 44.1 kHz.

The implementation described above is suitable for carrying whatever data is desired, for example lyrics, graphics or other additional information. Another possibility is, particularly where the data has been previously coded, to carry information on previous coding decisions, for example to reduce impairment in signal quality caused by cascaded decoding and recoding, or to simplify subsequent coding.

A further possibility is to carry a synchronisation signal or data word (in addition to further data or alone) either to assist in establishing synchronisation (as mentioned above) or to facilitate recoding of a previously coded signal by deducing previous coding decisions. An arrangement for carrying a synchronisation signal will now be described.

## Carrying a synchronisation signal

The technique to be described below enables deduction of synchronisation from the characteristics of the signal itself, rather than added data. It is also capable of surviving a level change. To assist in understanding, the basic principles of MPEG audio, discussed above, will be summarised again, with reference to this specific implementation.

## Synchronisation with MPEG-type audio - Basic Principles

MPEG audio uses a filter to split the audio into different subbands. The PCM input samples are transformed into corresponding subband samples by an analysis filter. These samples are then transformed back into PCM samples by a synthesis filter. There is an inherent delay in this process, dependent on the design of the filterbanks.

For each 32 input PCM samples the analysis filter produces 32 values, one for each subband. This group of subband values is known as a "subband sample". In MPEG audio a fixed number of PCM samples, a frame, are grouped together to make the coding more efficient. MPEG Layer 2, for example, uses a frame length of 1152 PCM samples, which is equivalent to 36 subband samples. Information is then carried in the MPEG bitstream about this whole frame, e.g. the number of bits per subband and the level of each subband as well as the quantised subband values.

The nature of the filterbank is such that when re-encoding a previously encoded signal, the original subband samples will only be recovered if the PCM samples going into the analysis filterbank line up to the same 32-sample boundary as used in the original encoding. If the filterbank 32-sample boundaries are not aligned extra noise will appear in the subbands.

In order to code the audio again optimally it would be useful to know where the 32-sample boundary is, to avoid inserting extra noise. It would also be useful to know where the frame boundary is, so that calculations of the appropriate bit-allocation are based on exactly the same signal. In theory this could lead to transparent re-encoding.

In this application of the invention, the aim is to insert a specific identification sequence into a subband in a decoder, which will then be embedded in the linear PCM output. A subsequent encoder can use this information to deduce the 32-sample boundaries in the original encoding and/or to deduce the frame boundary upon which the original encoding was based.

An advantage of the technique now being described is that deduction is direct from performing a filterbank on the audio. By inserting this identification sequence into an upper subband, the signal will be inaudible and continually present. It could alternatively be inserted into a lower subband, on its own as an identification signal or carried underneath the audio signal. A suitable identification signal could still be decoded after a level change.

Inserting identification sequence

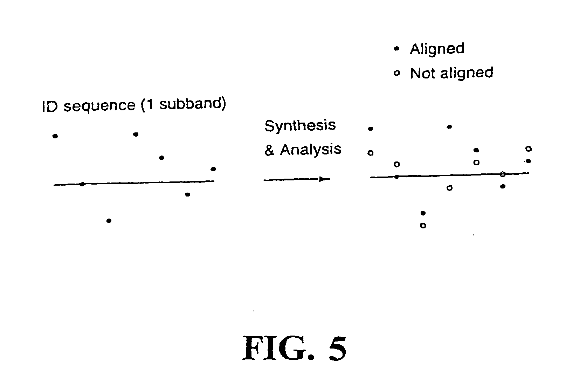

By inserting a suitable identification sequence into a subband, the original values of this sequence will only be recovered exactly when the original 32-sample boundary of the initial analysis filter is matched in the current analysis filterbank. Thus if the PCM audio is offset by something other than 32 samples another unique sequence will be produced. From this the original 32-sample boundaries can be determined. If the sequence is unique across the length of a frame (e.g. 1152 PCM samples for Layer 2, equivalent to 36 consecutive values in 1 particular subband), the frame position can also be easily deduced. An illustrative sequence is shown in Fig. 5.

If a gain change is applied to the PCM audio signal, only the relative levels of the identification sequence will be changed. Thus the same information could still be deduced, dependent on the inserted level of the identification sequence. By careful choice of a suitable identification sequence the frame position can be calculated with only a subset of its 36 samples. The sequence preferably comprises at least 4 words.

Example Identification Sequence

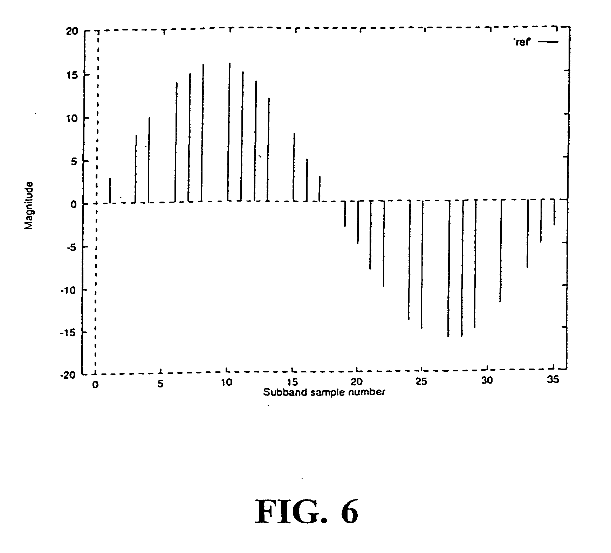

An example synchronisation sequence, shown in Fig. 6, consists of a sine wave with certain points set to zero. This can be inserted into an upper subband, e. g. subband 30. For 48kHz sampling this is above the maximum subband (27) defined by the MPEG standard. Thus this extra synchronisation signal would not be coded by a "dumb" encoder.

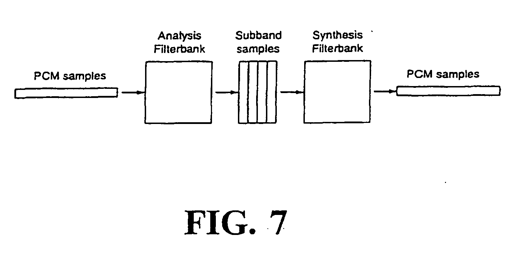

This sequence should be inserted into an appropriate subband before the synthesis filter (see Fig. 7). The analysis filter would then produce subband samples from which the frame and 32-sample boundary can be deduced.

To analyse the offset the modified encoder can use the following simple procedure (assuming it has no synchronisation information at the moment):

> Move in the next 32 PCM samples and run the filterbank to obtain a subband sample.

> Extract the value from the appropriate subband (e. g. 30).

> Check this value against a table of all known possible values for all offsets. (A table of 32 by 36 values.)

> If a match has been found, run the filterbank again a couple of times and check the consecutive values in the table.

> Derive the exact sample offset required from the position in the table.

When the filterbank is run again with the correct offset, the alignment can be double-checked very easily.

If the synchronisation signal is defined carefully to give unique values for all the offsets and positions the number of comparisons can be kept to a minimum. The synchronisation signal defined above would give a definite answer after running the filterbank 4 times, i.e. with just 4 subband samples. It is possible to define other synchronisation signals which would indicate the delay directly, but there is a trade-off in how much processing power is required to perform the filterbank against the time required for searching tables and deriving values.

A procedure for determining synchronisation when gain has been applied to the signal is similar in principle to the above, but the relative levels of consecutive samples should be used. E.g. if the subband values are A,B,C,... then a table of A/B,B/C,... would be used. This may impose further requirements on the synchronisation signal. The above signal could also indicate if there had been a phase inversion of the audio.

To recap, techniques have been described for carrying data "transparently" in a data stream in a manner which is compatible with subsequent or previous coding, particularly MPEG-type audio coding. Techniques for establishing synchronisation with a previously coded signal have also been described. The invention may be extended to other applications and the preferred features mentioned above may be provided independently unless otherwise stated.

**Claims**

1. A method of inserting auxiliary digital data in a main digital data stream having a defined uncompressed format which main digital data stream has previously been coded into the defined compressed format according to a defined coding scheme to produce a coded data stream, the method comprising receiving said coded data stream and decoding to produce the main digital data stream in the defined uncompressed format, the defined coding scheme compression encoding from the defined uncompressed format to the defined compressed format, the method comprising analysing and identifying based on the composition of the received data stream and based on the properties of the defined coding scheme at least one component of the main data stream having the defined uncompressed format which made substantially no contribution to the previously coded data stream having the defined compressed format and inserting, at the decoder which produces the main digital data signal from the coded data stream, data from the auxiliary data stream in the or each component to produce an output data stream having the defined uncompressed format carrying the auxiliary data.

2. A method according to Claim 1, wherein identifying the or each component is based on information concerning the previous coding.

3. A method of inserting auxiliary digital data in a main digital data stream having a defined uncompressed format which main digital data stream is subsequently to be coded into a defined compressed format according to a defined coding scheme to produce a coded data stream, the defined coding scheme compression encoding from the defined uncompressed format to the defined compressed format, the method comprising receiving the main digital data stream in said defined uncompressed format, analysing the received data stream and identifying based on the composition of the received data stream and based on the properties of the defined coding scheme at least one component of the main data stream having the defined uncompressed format which will make substantially no contribution to the subsequently coded data stream having the defined compressed format and inserting, at a data insertion unit having combined functions of an encoder and decoder for said analysing, data from the auxiliary data stream in the or each component to produce an output data stream having the defined uncompressed format carrying the auxiliary data.

4. A method according to any preceding claim, wherein the main data comprises audio data to be coded according to an MPEG-type audio coding scheme and identifying at least one component comprises estimating quantisation levels, the auxiliary data being inserted at a level below or at the quantisation noise floor.

5. A method of inserting auxiliary data into a main data stream according to any preceding claim wherein the main data stream is an audio data stream which audio data stream is subsequently to be coded according to a defined coding scheme by analysing the audio data into a plurality of sub-bands and quantising the sub-bands or which audio data stream has previously been coded according to said defined coding scheme and decoded, the method comprising estimating sub-bands and quantisation levels for a subsequent or previous coding and inserting the auxiliary data at a level substantially below the level of estimated quantisation noise.

6. A method according to any preceding claim, further comprising coding the output data stream.

7. A method according to Claim 6, comprising adjusting or selecting at least one parameter or decision associated with said coding in dependence on data from the auxiliary data stream.

8. A method according to Claim 6 or 7 wherein the auxiliary data is extracted prior to or during said coding.

9. A method according to any preceding claim wherein coding includes quantising data words corresponding to said main digital data stream, or a transformed version thereof, to a plurality of levels less than the number of levels codable by said data words.

10. A method according to Claim 4 or 5 or any claim dependent thereon wherein estimating sub-bands and quantisation levels includes transforming the audio data from the time domain to the frequency domain.

11. A method according to Claim 10 wherein the auxiliary data is inserted in the frequency domain to produce modified frequency domain data, and the modified frequency domain data is transformed back to the time domain.

12. A method according to any preceding claim wherein the auxiliary data is used to establish synchronisation with or to maintain consistency with a previous coding of the main data stream.

13. A method according to any preceding claim wherein the auxiliary data to be carried includes a defined synchronisation sequence.

14. A method according to Claim 13 wherein the sequence comprises at least 4 words.

15. A method according to any preceding claim, wherein the main data comprises audio data to be coded according to an MPEG-type audio coding scheme, further comprising inserting further data into sub-bands below the level of audibility or above the range of normal hearing.

16. Apparatus for inserting auxiliary data into a data stream comprising:

means for receiving a main digital data stream in a defined uncompressed format which main digital data stream is subsequently to be coded according to a defined coding scheme to produce a coded data stream or which main digital data stream has previously been coded according to a defined coding scheme to produce a coded data stream and decoded;
means for analysing the received data stream and identifying at least one component of the main data stream which will make substantially no contribution to the subsequently coded data stream or which made substantially no contribution to the previously coded data stream; and means for inserting auxiliary data in the or each component to produce an output data stream carrying the auxiliary data, the data insertion means having combined functions of an encoder and decoder and providing said means for analysing.

17. Apparatus according to Claim 16, comprising a decoder for decoding a previously coded data stream to generate said main digital data stream.

18. Apparatus for inserting auxiliary data into a data stream comprising:

means for receiving a coded digital data stream coded according to a defined coding scheme, means for decoding the received digital data stream according to the defined coding scheme to produce a main digital data stream; means for analysing and identifying at least one component of the main data stream which made substantially no contribution to the previously coded data stream; and means for inserting auxiliary data in the or each component to produce an output data stream carrying the auxiliary data, the means for inserting being integrated with the means for decoding.

19. Apparatus according to any one of claims 16 to 18, wherein the identifying means comprises means for estimating sub-bands which are unoccupied or means for estimating quantisation levels of an MPEG-type audio coding process.

20. Apparatus for inserting auxiliary data into a main data stream according to any one of claims 16 to 19 wherein the main data stream is an audio data stream, which audio data stream is subsequently to be coded according to a defined coding scheme by analysing the audio data into a plurality of sub-bands and quantising the sub-bands or which audio data stream has previously been coded according to said defined coding scheme and decoded, the apparatus comprising:

means for estimating sub-bands and quantisation levels for a subsequent or previous coding; and means for inserting the auxiliary data at a level substantially below the level of estimated quantisation noise.

21. Apparatus according to any one of claims 19 to 20, wherein the means for estimating sub-bands and quantisation levels includes means for transforming the audio data from the time domain to the frequency domain.

22. Apparatus according to Claim 21, including means for inserting the auxiliary data in the frequency domain to produce modified frequency domain data and means for transforming the modified frequency domain data back to the time domain.

23. Apparatus according to Claim 17, wherein the means for identifying the or each component or estimating sub-bands and quantisation levels is arranged to use information concerning the previous coding.

24. Apparatus according to Claim 17 or 23, arranged to insert auxiliary data for use in establishing synchronisation with or maintaining consistency with a previous coding of the main data stream.

25. Apparatus according to any of Claims 16 to 24, arranged to insert a defined synchronisation sequence as at least part of the auxiliary data.

26. Apparatus according to Claim 25, wherein the sequence comprises at least 4 words.

27. A system according to any of Claims 16 to 26, further comprising means for coding the output data stream.

**Patentansprüche**

1. Verfahren zum Einfügen von digitalen Zusatz- bzw. Hilfsdaten in einen digitalen Hauptdatenstrom, der ein definiertes, unkomprimiertes Format aufweist, wobei der digitale Hauptdatenstrom vorher in das definierte komprimierte Format, entsprechend einem definierten Kodierschemas, kodiert wurde, um einen kodierten Datenstrom zu erzeugen, wobei das Verfahren, welches das Empfangen und Dekodieren des kodierten Datenstroms umfasst, um den digitalen Hauptdatenstrom in dem definierten, unkomprimierten Format zu erzeugen, wobei die definierte Kodierschemakompression von dem definierten unkomprimierten Format zu dem definierten komprimierten Format kodiert, wobei das Verfahren Analysieren und Identifizieren basierend auf der Zusammensetzung des empfangenen Datenstroms, und basierend auf den Eigenschaften des definierten Kodierschemas, wenigstens einer Komponente des Hauptdateustroms aufweist die das definierte, unkomprimierte Format hat, welches keinen wesentlichen Beitrag zu dem vorher kodierten Datenstrom macht, der das definierte, komprimierte Format aufweist, und dem Zusatz- bzw. Hilfsdatenstrom werden bei dem Dekoder, der das digitale Hauptdatensignal von dem kodierten Datenstrom erzeugt, in die oder jede Komponente eingesetzt, um einen Ausgabedatenstrom zu erzeugen, der das definierte, unkomprimierte Format aufweist, das die Zusatz- bzw. Hilfsdaten trägt.

2. Verfahren gemäß Anspruch 1, bei welchem das Identifizieren der oder jeder Komponente auf Informationen basiert, die die vorhergehende Kodierung betreffen.

3. Verfahren zum Einfügen von digitalen Zusatz- bzw. Hilfsdaten in einen digitalen Hauptdatenstrom, der:

ein definiertes, unkomprimiertes Format aufweist, wobei der digitale Hauptdatenstrom anschließend in ein definiertes, komprimiertes Format entsprechend einem definierten Kodierschemas zu kodieren ist, um einen kodierten Datenstrom zu erzeugen, wobei die definierte Kodierschemakomprimierung vor dem definierten unkomprimierten Format zu dem definierten komprimierten Format kodiert, wobei das Verfahren das Empfangen des digitalen Hauptdatenstroms in dem definierten unkomprimierten Format, das Analysieren und das Identifizieren des empfangenen Datenstroms basierend auf der Zusammensetzung des empfangenen Datenstroms und basierend auf den Eigenschaften des definierten Kodierschemas umfasst, wobei mindestens eine Komponente des Hauptdatenstroms, die das definierte unkomprimierte Format aufweist, das im Wesentlichen keinen Beitrag zu dem anschließend kodierten Datenstrom leistet, welcher das definierte komprimierte Format aufweist, und an einer Dateneinfügungseinheit die kombinierte Funktionen eines Kodierers und eines Dekodierers zu dem Analysieren aufweist, werden Daten von dem Zusatz- bzw. Hilfsdatenstrom in die oder jede Komponente eingefügt, um einen Ausgangsdatenstrom zu erzeugen, der das definierte, unkomprimierte Format aufweist, das die Zusatz- bzw. Hilfsdaten trägt.

4. Verfahren gemäß irgend einem der vorhergehenden Ansprüche, bei dem die Hauptdaten Audiodaten umfassen, die entsprechend einem Audiokodierungsschema vom MPEG-Typ zu kodieren sind, und das Identifizieren wenigstens einer Komponente umfasst die Abschätzung von Quantisierungspegeln, wobei die Zusatz- bzw. Hilfsdaten bei einem Pegel unter dem Quantisierungsrauschuntergrund eingefügt werden.

5. Verfahren zum Einfügen von Zusatz- bzw. Hilfsdaten in einen Hauptdatenstrom gemäß irgend einem der vorangehenden Ansprüche, wobei der Hauptdatenstrom ein Audiodatenstrom ist, der anschließend gemäß einem definierten Kodierungsschema, durch Analysieren der Audiodaten in einer Vielzahl von Sub-Bändern, und Quantisieren der Sub-Bänder zu kodieren ist,, oder welcher Audiodatenstrom vorher gemäß dem besagten definierten Kodierungsschema kodiert und dekodiert worden ist, wobei das Verfahren das Abschätzen von Sub-Bändern und Quantisierungspegelen für ein nachfolgendes oder vorangehendes Kodieren, und das Einfügen von Zusatz- bzw. Hilfsdaten einen Pegel im Wesentlichen unter dem Pegel des abgeschätzten Quantisierungsrauschens umfasst.

6. Verfahren gemäß irgendeinem der vorausgehenden Ansprüche, das ferner das Kodieren des Ausgangsdatenstroms umfasst,

7. Verfahren gemäß Anspruch 6, welches das Anpassen oder Auswählen von wenigstens einem Parameter oder einer Entscheidung, der/die mit dem Kodieren verknüpft ist, in Abhängigkeit von Daten vom Zusatz- bzw. Hilfsdatenstrom aufweist.

8. Verfahren gemäß Anspruch 6 oder 7, bei dem die Zusatz- bzw. Hilfsdaten vor oder während des Kodierens extrahiert werden.

9. Verfahren gemäß irgend einem der vorausgehenden Ansprüche, bei welchem das Kodieren das Quantisieren von Datenworten entsprechend zu dem digitalen Hauptdatenstrom oder einer transformierten Version davon zu einer Vielzahl von Pegeln umfasst, die geringer als die Anzahl der Pegel ist, die durch die Datenworte kodierbar sind.

10. Verfahren gemäß Anspruch 4 oder 5 oder irgendeinem davon abhängigen Anspruch, bei welchem geschätzte Sub-Bänder und Quantisierungspegel das Umwandeln der Audiodatcn von der Zeitdomäne in die Frequenzdomäne umfassen.

11. Verfahren gemäß Anspruch 10, bei welchem die Zusatz- bzw. Hilfsdaten in die Frequenzdomäne eingefügt werden, um modifizierte Frequenzdomänendaten zu erzeugen, und die modifizierten Frequenzdomänendaten werden zurück in die Zeitdomäne transformiert.

12. Verfahren gemäß irgendeinem der vorausgehenden Ansprüche, bei welchem die Zusatz- bzw. Hilfsdaten dazu verwendet werden, um eine Synchronisierung mit einer vorangegangenen Kodierung des Hauptdatenstroms einzurichten aufrecht zu erhalten oder eine Konsistenz dazu.

**13.** Verfahren gemäß irgendeinem der vorausgehenden Ansprüche, bei welchem die zu tragenden Zusatz- bzw. Hilfsdaten eine festgelegte Synchronisierungssequenz enthalten.

**14.** Verfahren gemäß Anspruch 13, bei welchem die Sequenz mindestens 4 Wörter umfasst.

**15.** Verfahren gemäß irgendeinem der vorausgehenden Ansprüche, bei welchem die Hauptdaten Audiodaten umfassen, die entsprechend eines Audiokodierungsschemas vom MPEG-Typ zu kodieren, sind und das ferner das Einfügen weiterer Daten in Sub Bänder unter dem Pegel der Hörbarkeit oder über dem Bereich des normalen Hörens umfasst.

**16.** Vorrichtung zum Einfügen von Zusatz- bzw. Hilfsdaten in einen Datenstrom, umfassend:

Mittel zum Empfangen eines digitalen Hauptdatenstroms in einem definierten, unkomprimierten Format, wobei der digitale Hauptdatenstrom anschließend entsprechend einem festgelegten Kodierungsschema zu kodieren ist, um einen kodierten Datenstrom zu erzeugen, oder wobei der digitale Hauptdatenstrom vorher entsprechend einem festgelegten Kodierungsscbema kodiert worden ist, um einen kodierten Datenstrom zu erzeugen, und zu dekodieren ist; Mittel zum Analysieren des empfangenen Datenstroms und zum Identifizieren mindestens einer Komponente des Hauptdatenstroms, die im Wesentlichen keinen Beitrag zum nachfolgend kodierten Datenstrom leistet oder die im Wesentlichen keinen Beitrag zum vorher kodierten Datenstrom leistet; und Mittel zum Einfügen von Zusatz- bzw. Hilfsdaten in die oder jede Komponente, um einen auszugebenden Datenstrom zu erzeugen, der die Zusatz- bzw. Hilfsdaten trägt, bei welchem Mittel zum Einfügen von Daten kombinierte Funktionen eines Kodierers und eines Dekodierens aufweist, und das Mittel zum Analysieren zur Verfügung stellt.

**17.** Vorrichtung gemäß Anspruch 16, welche einen Dekodierer zum Dekodieren eines vorher kodierten Datenstroms umfasst, um den digitalen Hauptdatenstrom zu erzeugen.

**18.** Vorrichtung zum Einfügen von Zusatz- bzw. Hilfsdaten in einen Datenstrom, umfassend:

Mittel zum Empfangen eines kodierten digitalen Datenstroms, der entsprechend einem festgelegten Kodierungsschema kodiert wurde; Mittel zum Dekodieren des empfangenen digitalen Datenstroms entsprechend zu dem festgelegten Kodierungsschema, um einen digitalen Hauptdatenstrom zu erzeugen; Mittel zum Analysieren und Identifizieren mindestens einer Komponente des Hauptdatenstroms, die im Wesentlichen keinen Beitrag zum vorher kodierten Datenstrom leisten; und Mittel zum Einfügen von Zusatz- bzw. Hilfsdaten in die oder jede Komponente, um einen auszugebenden Datenstrom zu erzeugen, der die Zusatz- bzw. Hilfsdaten trägt, wobei die Mittel zum Einfügen in die Mittel zum Dekodieren integriert sind.

**19.** Vorrichtung gemäß irgendeinem der Ansprüche 16 bis 18, bei welchem die identifizierenden Mittel ihrerseits Mittel um Sub Bänder zu berechnen, die nicht belegt sind, oder Mittel zur Abschätzung von Quantisierungspegeln eines Audiokodierungsprozesses vom MPEG-Typ umfassen.

**20.** Vorrichtung zum Einfügen von Zusatz- bzw. Hilfsdaten in einen Hauptdatenstrom, gemäß irgendeinem der Ansprüche 16 bis 19, bei welchem der Hauptdatenstrom ein Audiodatenstrom ist, welcher anschließend entsprechend einem definierten Kodierungsschema Analysieren der Audiodaten in einer Vielzahl von Sub Bändern und Quantisierung der Sub Bändern, oder welcher der Audiodatenströme vorher entsprechend dem definierten Kodierungsschema kodiert wurde, zu kodieren ist, wobei das Vorrichtung umfasst:

Mittel zum Abschätzen von Sub- Bändern und Quantisierungspegeln für ein anschließendes oder vorheriges Kodieren; und Mittel zum Einfügen von Zusatz- bzw. Hilfsdaten bei einem Pegel, der wesentlich unter des Pegels des abgeschätzten berechneten Quantisierungsrauschens ist.

**21.** Vorrichtung gemäß irgendeinem der Ansprüche 19 bis 20, wobei das Mittel zur Abschätzung von Sub- Bändern und Quantisierungspegeln ein Mittel zum Transformieren der Audiodaten von der Zeitdomäne in die Frequenzdomäne umfasst.

**22.** Vorrichtung gemäß Anspruch 21, welches ein Mittel zum Einfügen von Zusatz- bzw. Hilfsdaten in die Frequenzdomäne, um modifizierte Frequenzdomänedaten zu erzeugen und Mittel umfasst, um die modifizierten Frequenzdomänedaten in die Zeitdomäne zurück zu transformieren.

**23.** Vorrichtung gemäß Anspruch 17, bei welchem das Mittel zum Identifizieren der oder jeder Komponente oder zum Abschätzen von Sub Bändern und Quantisierungspegeln so eingerichtet ist, um Informationen zu benutzen, die das vorausgegangene Kodieren betreffen.

24. Vorrichtung gemäß Anspruch 17 oder 23, das so eingerichtet ist, um Zusatz- bzw. Hilfsdaten einzufügen, die dazu genutzt werden, um Synchronisation mit einem vorausgegangenen Kodieren des Hauptdatenstroms herzustellen, oder Konsistenz mit diesem aufrecht zu erhalten.

25. Vorrichtung gemäß irgendeinem der Ansprüche 16 bis 24, die eingerichtet ist, um eine definierte Synchronisierungssequenz wenigstens als Teil der Zusatz- bzw. Hilfsdaten einzufügen.

26. Vorrichtung gemäß Anspruch 25, bei welchem die Sequenz bzw. Abfolge mindestens 4 Wörter umfasst.

27. System gemäß irgendeinem der Ansprüche 16 bis 26, das ferner Mittel zum Kodieren des Ausgangsdatenstroms umfasst.

## Revendications

1. Procédé permettant d'introduire des données numériques auxiliaires dans un train de données numériques principales ayant un format non compressé défini, lequel train de données numériques principales a précédemment été codé dans le format compressé défini selon un schéma de codage défini pour produire un train de données codées, ce procédé faisant intervenir la réception dudit train de données codées et son décodage afin de produire le train de données numériques principales dans le format non compressé défini, le schéma de codage défini codant par compression depuis le format non compressé défini dans le format compressé défini, ce procédé comprenant l'analyse et l'identification à partir de la composition du train de données reçues et des propriétés du schéma de codage défini d'au moins un composant du train de données principales ayant le format non compressé défini qui n'apporte pour l'essentiel aucune contribution au train de données précédemment codées ayant le format compressé défini et insérant, au niveau du décodeur qui produit le signal principal de données numériques à partir du train de données codées, des données issues du train de données auxiliaires dans le ou chaque composant pour produire un train de données de sortie ayant le format non compressé défini transportant les données auxiliaires.

2. Procédé selon la Revendication 1, dans lequel l'identification du ou de chaque composant est basée sur des informations concernant son codage antérieur.

3. Procédé d'insertion de données numériques auxiliaires dans un train de données numériques principales ayant un format non compressé défini, lequel train de données numériques principales est ensuite codé en un format compressé défini selon un schéma de codage défini pour produire un train de données codées, le schéma de codage codant par compression depuis le format non compressé défini dans le format compressé défini, ce procédé comprenant la réception du train de données numériques principales dans ledit format non compressé défini, l'analyse du train de données reçues et l'identification à partir de la composition du train de données reçues et des propriétés du système de codage défini d'au moins un composant du train de données principales ayant le format non compressé défini qui n'apporte pour l'essentiel aucune contribution au train de données codées ultérieurement ayant le format compressé défini, et insérant, dans une unité d'insertion de données ayant les fonctions combinées d'encodeur et de décodeur pour ladite analyse, les données du train de données auxiliaires dans le ou chaque composant afin de produire un train de données de sortie ayant le format non compressé défini transportant les données auxiliaires.

4. Procédé selon l'une des revendications précédentes, dans lequel les données principales comprennent des données sonores devant être codées selon un schéma de codage audio de type MPEG et l'identification d'au moins un composant comprend l'estimation de niveaux de quantification, les données auxiliaires étant insérées au niveau inférieur ou égal au seuil de bruit de quantification.

5. Procédé d'insertion de données auxiliaires dans un train de données principales selon l'une des revendications précédentes, lequel le train de données principales est un train de données sonores, lequel train de données sonores doit ensuite être codé selon un schéma de codage défini en analysant les données sonores en une pluralité de sous-bandes et quantifiant les sous-bandes ou lequel train de données sonores a précédemment été codé selon ledit schéma de codage défini puis décodé, cette méthode comprenant l'estimation de sous-bandes et de niveaux de quantification pour un codage ultérieur ou antérieur et l'insertion de données auxiliaires à un niveau sensiblement inférieur au niveau du bruit de quantification estimé.

6. Procédé selon l'une des revendications précédentes, comprenant en outre le codage du train de données de sortie.

7. Procédé selon la revendication 6, comprenant l'ajustement ou la sélection d'au moins un paramètre ou décision associé audit codage de façon dépendante par rapport aux données issues du train de données auxiliaires.

8. Procédé selon les Revendications 6 ou 7, dans lequel les données auxiliaires sont extraites avant ou pendant ledit codage.

9. Procédé selon l'une des revendications précédentes, dans lequel le codage inclut la quantification de mots de données correspondant audit train de données numériques principal, ou à une version transformée de ce dernier, en une pluralité de niveaux en moindre nombre que le nombre de niveaux codable par lesdits mots de données.

10. Procédé selon la Revendication 4 ou 5 ou toute revendication en dépendant, dans lequel l'estimation de sous-bandes et niveaux de quantification inclut la transformation des données sonores du domaine temporel dans le domaine fréquentiel.

11. Procédé selon la Revendication 10 dans lequel les données auxiliaires sont insérées dans le domaine fréquentiel pour produire des données de domaine fréquentiel modifiées, et où les données de domaine fréquentiel modifiées sont retransformées à nouveau dans le domaine temporel.

12. Procédé selon l'une des revendications précédentes dans lequel les données auxiliaires sont utilisées pour établir une synchronisation avec ou pour maintenir la cohérence avec un codage précédent du train de données principales.

13. Procédé selon l'une des revendications précédentes, dans lequel les données auxiliaires à transporter incluent une séquence de synchronisation définie.

14. Procédé selon la Revendication 13 dans lequel la séquence comprend au moins 4 mots.

15. Procédé selon l'une des revendications précédentes, dans lequel les données principales comprennent des données sonores à coder selon un schéma de codage audio de type MPEG, comprenant en outre l'insertion d'autres données dans des sous-bandes au-dessous du niveau d'audibilité ou au-dessus de la plage d'écoute normale.

16. Appareil pour insérer des données auxiliaires dans un train de données, comprenant :

des moyens pour recevoir un train de données numériques principal dans un format non compressé défini, lequel train de données numériques principales devant ensuite être codé selon un schéma de codage défini pour produire un train de données codées ou lequel train de données numériques principales a déjà été codé selon un schéma de codage défini pour produire un train de données codées puis décodé ; des moyens pour analyser le train de données reçues et identifier au moins un composant du train de données principales qui n'apportera pour l'essentiel aucune contribution au train de données codées ultérieurement ou qui n'a apporté pour l'essentiel aucune contribution au train de données antérieurement codées ; et des moyens pour insérer des données auxiliaires dans le ou chaque composant pour produire un train de données de sortie transportant les données auxiliaires, les moyens d'insertion de données ayant les fonctions combinées d'un encodeur et d'un décodeur et fournissant lesdits moyens d'analyse.

17. Appareil selon la Revendication 16, comprenant un décodeur pour décoder un train de données précédemment codées pour générer ledit train de données numériques principales.

18. Appareil pour insérer des données auxiliaires dans un train de données, comprenant :

des moyens pour recevoir un train de données numériques codées, codées selon un schéma de codage défini, des moyens pour décoder le train de données numériques reçu selon le schéma de codage défini pour produire un train de données numériques principales ; des moyens pour analyser et identifier au moins un composant du train de données principales, qui n'apportaient pour l'essentiel aucune contribution au train de données codées antérieurement ; et des moyens pour insérer des données auxiliaires dans le ou chaque composant pour produire un train de données de sortie transportant les données auxiliaires, les moyens d'insertion étant intégrés avec les moyens de décodage.

19. Appareil selon l'une des revendications 16 à 18, dans lequel les moyens d'identification comprennent des moyens pour estimer des sous-bandes qui sont inoccupées ou des moyens pour estimer les niveaux de quantification d'un processus de codage audio de type MPEG.

20. Appareil pour insérer des données auxiliaires dans un train de données principales selon l'une des revendications 16 à 19, dans lequel le train de données principales est un train de données sonores, lequel train de données sonores devant ensuite être codé selon un schéma de codage défini en analysant les données sonores en une pluralité de sous-bandes et en quantifiant les sous-bandes, ou lequel train de données sonores a précédemment été codé selon ledit schéma de codage puis décodé, cet appareil comprenant :

des moyens pour estimer les sous-bandes et niveaux de quantification pour un codage ultérieur ou antérieur ; et

des moyens pour insérer les données auxiliaires à un niveau pour l'essentiel inférieur au seuil du bruit de quantification estimé.

**21.** Appareil selon l'une des revendications 19 à 20, dans lequel les moyens d'estimation des sous-bandes et niveaux de quantification incluent des moyens pour transformer les données sonores du domaine temporel dans le domaine fréquentiel.

**22.** Appareil selon la Revendication 21, incluant des moyens pour insérer les données auxiliaires dans le domaine fréquentiel pour produire des données modifiées de domaine fréquentiel et des moyens pour retransformer les données modifiées de domaine fréquentiel dans le domaine temporel.

**23.** Appareil selon la Revendication 17, dans lequel les moyens d'identification du ou de chaque composant ou d'estimation des sous-bandes et niveaux de quantification sont organisés pour utiliser les informations relatives au codage antérieur.

**24.** Appareil selon les Revendications 17 ou 23, organisé pour insérer les données auxiliaires pour être utilisées dans l'établissement d'une synchronisation avec un codage précédent du train de données principales ou le maintien de la cohérence avec ce codage.

**25.** Appareil selon l'une des Revendications 16 à 24, disposé pour insérer une séquence de synchronisation définie comme étant au moins une partie des données auxiliaires.

**26.** Appareil selon la Revendication 25, dans lequel la séquence comprend au moins 4 mots.

**27.** Système selon l'une des Revendications 16 à 26, comprenant en outre des moyens pour coder le train de données de sortie.

**FIG. 1**

**FIG. 2**

Level (dB)

— Scalefactors
.---- Lowest level coded

Subband

# FIG. 3

FIG. 4

FIG. 5

**FIG. 6**

# FIG. 7